# EUROPEAN PATENT SPECIFICATION

(11) **EP 1 818 558 B1**
(45) Date of publication and mention of the grant of the patent: **01.07.2009**
(21) Application number: 07001842.9
(22) Date of filing: 29.01.2007
(51) Int. Cl.: F16D 27/00, F16D 41/08, F16D 48/06, B60W 10/08, B60W 10/02, B60W 20/00, B60K 6/52

(54) **Motor drive transmission control for automotive vehicle**
Übertragungssteuerung für Motorgetriebe von Kraftfahrzeugen
Contrôle de transmission par entraînement moteur pour véhicule automobile

(30) Priority: 08.02.2006 JP 2006031161
(43) Date of publication of application: 15.08.2007
(73) Proprietor: NTN Corporation, Osaka-shi, Osaka 550-0003 (JP)
(72) Inventor: Nojiri, Hiromi, c/o NTN Corporation, Iwata-shi, Shizuoka 438-0037 (JP); Okada, Koichi, c/o NTN Corporation, Iwata-shi, Shizuoka 438-0037 (JP); Saito, Takahide, c/o NTN Corporation, Iwata-shi, Shizuoka 438-0037 (JP)
(74) Representative: Behrmann, Niels

(56) References cited:
- JP-A- 2005 124 284
- US-A1- 2002 134 634
- US-A1- 2005 139 401

## Description

### BACKGROUND OF THE INVENTION

### (Field of the Invention)

The present invention relates to a motor drive transmission control device for a motor-driven vehicle or a four wheel drive vehicle of a kind utilizing an electric drive motor and a combustion engine and, more particularly, to the motor drive transmission control device having a clutch interposed between the electric drive motor and the vehicle wheels.

### (Description of the Prior Art)

In recent years, gas-electric hybrid, four wheel drive cars of a type, in which a combustion engine and an electric drive motor are selectively used to drive front wheels and rear wheels, have come to be actively developed. In those motor driven cars, a clutch is generally employed in the drive transmission system between the electric drive motor and the wheels for protecting the electric drive motor from being rotated at an over speed by the effect of a reverse input from the wheels and also for avoiding an accident, which would occur during travel as a result of an abnormality occurring in the electric drive motor.

For the clutch referred to above, either a dog clutch or a friction clutch is generally utilized. However, with the dog clutch, the number of revolutions on a drive side is required to be strictly synchronized with that on a driven side during coupling of the clutch and, therefore, the control is difficult to achieve. On the other hand, in the case of the friction clutch, although no problem arise as to the synchronization in speed at the time of coupling and decoupling of the clutch, there is the possibility that even when the clutch is decoupled, drive and driven members will not be completely disengaged from each other because of the presence of a viscous fluid within the clutch and, therefore, a portion of the reverse input from the wheel may be transmitted to the electric drive motor.

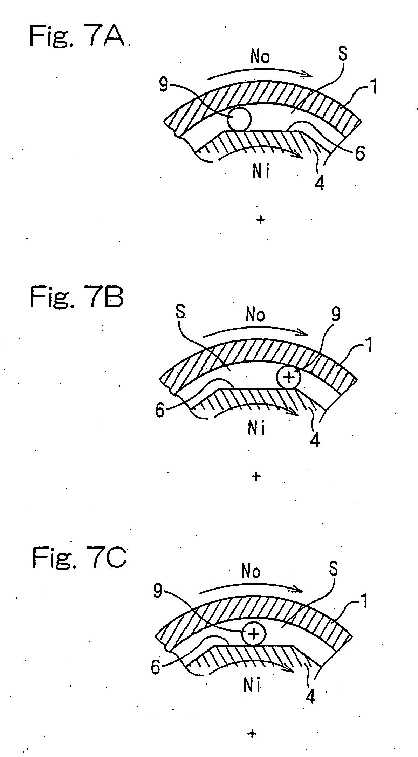

In order to alleviate the problem discussed above, a two-way roller clutch is suggested, for example, in which while as shown in Fig. 7, a wedge shaped engagement space S is defined by each of cam face 6 between an outer member 1, which forms a rotatable member linked with the wheels, and an inner member 4, which forms a rotatable member linked with the electric drive motor, an engagement element 9 in the form of a roller is operatively positioned within this engagement space S. This suggested roller clutch can assume a coupling position, when a retainer (not shown) retaining the engagement element 9 is constrained by an electromagnet relative to the outer member 1, and a decoupled position when the retainer is released with the electromagnet deenergized electrically.

However, the roller clutch has been found having a problem, in that even though the electric drive motor is deenergized to halt and the retainer is released with the electromagnet deenergized electrically, the engagement element 9 may occasionally remain locked within the engagement space S.

By way of example, in a condition, in which the four wheel automotive vehicle is driven by the combustion engine and the electric drive motor, the engagement element 9 is held in a positively wedged state, that is, the engagement element 9 remains locked within the engagement space S on the trailing side with respect to the direction of rotation of the inner member, as shown in Fig. 7(A). When while in this condition, the automotive vehicle runs on a down grade and the traveling speed consequently increases above a certain level or the accelerator is released, the outer member 1, which forms the rotatable member linked with the wheels, rotates at a speed higher than that of the inner member 4 as shown in Fig. 7(B). Once the outer member 1 rotate at the higher speed, the engagement element 9 is held in a reverse (or negatively) wedged state, in which as shown in Fig. 7(B), the engagement element 9 remains locked within the engagement space S on the leading side with respect to the direction of rotation of the inner member.

When while in the reverse wedged condition the electric drive motor is deenergized to halt and the retainer is released with the electromagnet switched off, the roller clutch is locked in the coupled position and does not assume the decoupled position as a force tending to force the engagement element 9 to wedge acts by the rotation of the wheel. Because of this, the electric drive motor tends to be driven at an over speed by the effect of a reverse input from the wheels.

In this type of roller clutch discussed above, as a control method effective to assuredly decouple the clutch, the clutch operable in such a manner as shown by the flow in Fig. 8 has been suggested. See, for example, the JP Laid-open Patent Publication No. 2005-124284. According to this control method, while the wheels are driven by the electric drive motor, the retainer in the clutch is held in a constrained condition to allow the clutch to assume the coupled position (R1), but in the event that a halt command necessary to halt the electric drive motor is issued (R2), the electric drive motor is once accelerated (R3) and, when the rotational speed of the rotatable member of the clutch linked with the electric drive motor attains a value greater than that of the rotatable member thereof linked with the wheel (R4), the retainer is released (R5) and subsequently, the electric drive motor is halted (R6).

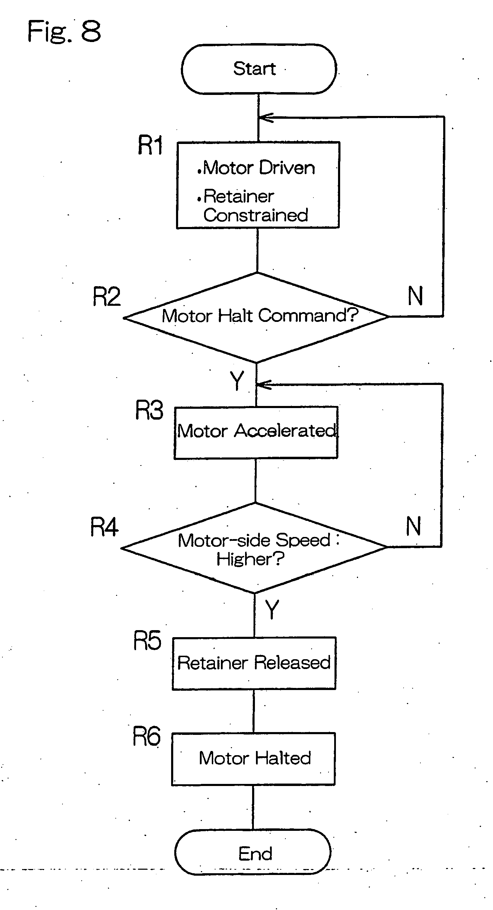

According to the control method discussed with reference to Fig. 8, the rotational speed Ni (shown in Fig. 7) of the inner member 4, which forms the rotatable member linked with the electric drive motor, is allowed to increase to a value greater than the rotational speed No of the outer member 1, which forms the rotatable member linked with the wheels, (as represented by respective steps R3 and R4), so that the engagement element 9 can be held in the positively wedged state as shown in Fig. 7(A), that is, the engagement element 9 remains locked within the engagement space S on the trailing side with respect to the direction of rotation of the inner member. Accordingly, when the retainer is released (R5) and the electric drive motor is halted (R6), the engagement element 9 moves to a neutral position within the engagement space S as shown in Fig. 7(C), with the roller clutch decoupled consequently.

However, according to the control method shown in and described with reference to Fig. 8, since the retainer is released when the rotational speed on the side of the electric drive motor has increased, the control method is considered somewhat insufficient in accomplishing an assured decoupling of the clutch.

### SUMMARY OF THE INVENTION

In view of the foregoing, the present invention has for its primary object to provide a motor drive transmission control device for a gas-electric hybrid automotive vehicle, in which a clutch of a type, in which the engagement elements are positioned within the respective engagement spaces delimited between the rotatable members linked respectively to the electric drive motor and the combustion engine, is interposed between the electric drive motor and the wheels, so that the clutch can be assuredly decoupled when the electric drive motor is halted.

In order to accomplish the foregoing object of the present invention, there is provided, in accordance with the present invention, a motor drive transmission control device which includes a clutch disposed in a drive transmission system for transmitting a drive from an electric drive motor to wheels. This clutch in turn includes a first rotatable member linked with the electric drive motor and a second rotatable member linked with the wheels, the first rotatable member and the second rotatable member being positioned one inside the other relative to each other; a cylindrical surface provided in one of the first and second rotatable members; a plurality of circumferentially spaced cam faces provided in the other of the first and second rotatable members and defining engagement spaces in cooperation with the cylindrical surface; engagement elements interposed within those engagement spaces; a retainer for regulating respective positions of the engagement elements in a circumferential direction; and a retainer constraining mechanism for selectively constraining and releasing the retainer relative to such one of the first and second rotatable members, whereby when the retainer is held in a constrained condition by the retainer constraining mechanism, the engagement elements are wedged within the corresponding engagement spaces to enable rotation in one of opposite directions to be transmitted between the first and second rotatable members.

The motor drive transmission control device of the structure described above also includes a motor-clutch linkage control unit operable to cause the retainer constraining mechanism to constrains the retainer, when the electric drive motor is operated, and to release the retainer when receiving a halt command to halt the electric drive motor, and to halt the electric drive motor after the electric drive motor is accelerated to allow the first rotatable member to attain a rotational speed higher than that of the second rotatable member.

According to the present invention, in preparation for the electric drive motor to be halted, the motor-clutch linkage control unit operates to release the retainer when receiving a halt command to halt the electric drive motor, and to halt the electric drive motor after the electric drive motor is once accelerated to allow the first rotatable member to attain a rotational speed higher than that of the second rotatable member. Accordingly, even though the engagement elements are held in a reverse wedged state within the corresponding engagement spaces, the electric drive motor can be halted after the engagement elements have come to assume a positively wedged state. Because of this, the clutch can be decoupled assuredly. In such case, since the electric drive motor is accelerated after the release of the retainer, decoupling of the clutch can be accomplished further assuredly. In this way, it is possible to avoid the clutch being locked in the coupled position, ensuring an exact disconnection of the reverse input from the wheels to the electric drive motor.

Also, since as a clutch to be interposed between the electric drive motor and the wheels, the clutch of a type, in which the engagement elements are disposed within the corresponding engagement spaces defined between the first and second rotatable members is employed, advantages possessed by this type of clutch can be appreciated. Specifically, as compared with the dog clutch, the operation of the clutch during coupling takes place smoothly and, also, there is no possibility that the clutch when decoupling may be held in an incompletely decoupled condition with part of the torque transmitted consequently such as observed with the friction clutch and, therefore, it is possible to achieve an assured disconnection of the torque.

In one preferred embodiment of the present invention, the motor-clutch linkage control unit, when used in an automotive vehicle including an electric motor drive system for transmitting a drive from the electric drive motor to the wheels and a combustion engine drive system for transmitting a drive from a combustion engine to other wheels, is operable to perform a series of controls ranging from the release of the retainer to the acceleration and halt of the electric drive motor in response to the halt command necessary to halt the electric drive motor during an operation of the combustion engine and the electric drive motor.

The motor drive transmission control device of the present invention may be applied to an automotive vehicle of a type that is driven by only an electric drive motor. However, if the motor drive transmission control device of the present invention is applied to a four wheel drive vehicle of a hybrid type that utilizes the electric drive motor and the combustion engine as hereinabove described, effects of an assured decupling of the clutch resulting from the use of the motor-clutch linkage control unit capable of performing the above described series of controls can be exhibited effectively.

The clutch is preferably an electromagnetically operated roller clutch, in which case the retainer constraining mechanism includes an electromagnet capable of being switched on and off to constrain and release the retainer, respectively, one at a time. This is particularly advantageous in that the control can easily be accomplished when the clutch is coupled, and when the clutch is decoupled, the drive member and the driven member can be completely isolated from each other.

In another preferred embodiment of the present invention, the clutch includes a switching spring engaged by the retainer and the inner member for applying a spring force biasing the retainer towards a released condition. This is particularly advantageous in that when the supply of an electric power to a coil of the electromagnet is interrupted, the retainer can be returned to the released condition by the effect of an elastic restoring force of the switching spring, allowing the inner member to rotate freely relative to the outer member.

### BRIEF DESCRIPTION OF THE DRAWINGS

In any event, the present invention will become more clearly understood from the following description of preferred embodiments plus further details thereof, when taken in conjunction with the accompanying drawings. In the accompanying drawings, like reference numerals are used to denote like parts throughout the several views, and:
Fig. 1 is a schematic explanatory diagram showing an automobile drive system utilizing the motor drive transmission control device according to a preferred embodiment of the present invention;
Fig. 2 is a flow chart showing the sequence of operation of a motor-clutch linkage control unit employed in the motor drive transmission control device of the present invention;
Fig. 3 is a longitudinal sectional view of a clutch employed in the motor drive transmission control device;
Fig. 4 is a cross-sectional view taken along the line III-III in Fig. 3;
Fig. 5 is a fragmentary perspective view showing a portion of the clutch;
Fig. 6(A) is a cross-sectional view taken along the line VI-VI in Fig. 3;
Fig. 6(B) is a fragmentary transverse sectional view of the clutch then held in an engaged condition;
Figs. 7(A) to 7(C) are fragmentary transverse sectional views showing different positions of an engagement element employed in the clutch, respectively; and
Fig. 8 is a flow chart showing the sequence of control hitherto practiced in the conventional art.

### DETAILED DESCRIPTION OF THE EMBODIMENTS

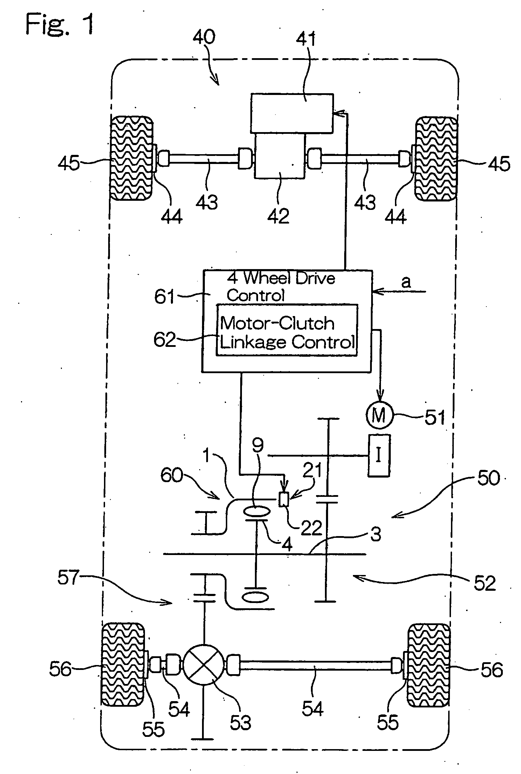

A preferred embodiment of the present invention will now be described with particular reference to Figs. 1 to 7. Referring to Fig. 1, there is schematically shown a drive system of an automotive vehicle employing the drive transmission control device according to this embodiment of the present invention. The illustrated automotive vehicle is a gas-electric hybrid car including an electric motor drive system 50, having an electric drive motor 51 as a drive source for driving rear wheels of the automotive vehicle, and a combustion engine drive system 40 having a combustion engine 41 as a drive source for driving front wheels of the automotive vehicle. The combustion engine drive system 40 is so designed that the torque of the combustion engine 41 can be transmitted to the left and right front wheels 45 through a transmission 42, a drive shaft 43 and a hub bearing unit 44.

The electric motor drive system 50 for the rear wheels is so designed that the driving torque of the electric drive motor 51 can be transmitted to the left and right rear wheels 56 through a reduction gear unit 52, a drive foece distributing mechanism 53, a drive shaft 54 and a hub bearing unit 55. A clutch 60 is interposed in a rear wheel drive system 57 for transmitting the drive from the electric drive motor 51 to the rear wheels 56.

The clutch 60 referred to above is an electromagnetically operated roller clutch including a retainer constraining mechanism 21 for selectively constraining and releasing a retainer in response to switching on and off of an electromagnet 22, respectively.

The electric drive motor 51 both included in the electric motor drive system 50 and the clutch 60, are adapted to be controlled by a four wheel drive control device 61 including, for example, a computer or the like. As a part of this four wheel drive control device 61, a motor-clutch linkage control unit 62 is employed for controlling the electric drive motor 51 and the clutch 60 in linkage with each other. This four wheel drive control device 60 is incorporated in, or otherwise mounted on, for example, an electric control unit (ECU) (not shown) of the automotive vehicle.

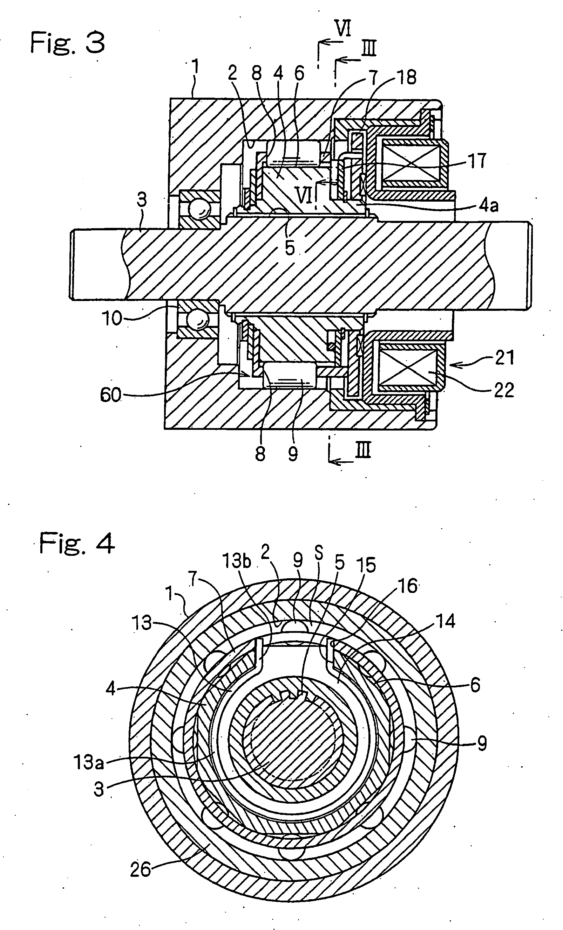

The details of the clutch 60 will now be described with particular reference to Figs. 3 to 7. The illustrated clutch 60 is in the form of an electromagnetically operated roller clutch and includes the outer member 1 having an input shaft 3 rotatably inserted therein through a bearing 10. The input shaft 3 has an outer periphery, on which the inner member 4, forming a rotatable member linked with the electric drive motor 51, mounted through serrations 5 for rotation together therewith.

The outer member 1 has an inner periphery formed with a cylindrical surface 2. On the other hand, the inner member 4 has an outer periphery formed with a plurality of circumferentially spaced cam faces 6 that defines respective engagement spaces S in cooperation with the cylindrical surface 2 of the outer member 1. Each of those engagement spaces S delimited between the cam faces 6 and corresponding portions of the cylindrical surface 2 of the outer member 1 serves as a wedge space of a configuration having a gap size progressively decreasing in two directions circumferentially opposite to each other.

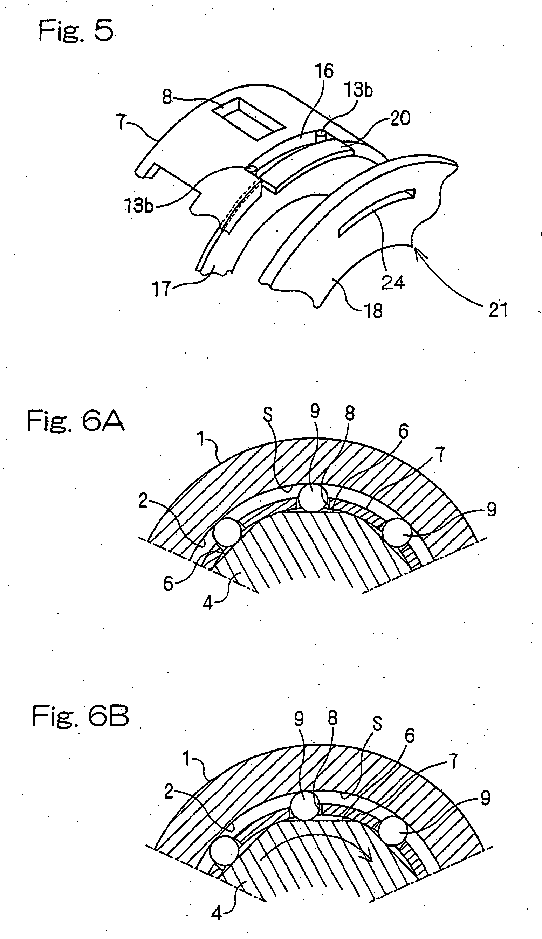

A ring-shaped retainer 7 is incorporated in between the outer member 1 and inner member 4 and is formed with pockets 8 each defined at a location confronting the respective cam face 6, and engagement elements 9 each in the form of a roller are rollingly accommodated within those pockets 8. When the inner member 4 and the retainer 7 rotate relative to each other, the engagement element 9 are engaged in part with the cylindrical surface 2 and in part with the associated cam faces 6 as shown in Fig. 6(B) to thereby transmit rotation of the inner member 4, which rotates together with the input shaft 3, to the outer member 1.

As best shown in Figs. 4 and 5, a switching spring 13 operable to retain the retainer 7 in a neutral position is incorporated in between the retainer 7 and the inner member 4. More specifically, this switching spring 13 is of a generally arcuate configuration made up of an arcuate portion 13 a having its opposite ends formed with engagement pieces 13b that extends generally radially outwardly. This switching spring 13 is accommodated within a spring chamber 14 defined in one end face of the inner member 4 and, in this condition, the engagement 13b are inserted in a cutout 15, defined in a portion of a peripheral wall of the spring chamber 14, and a cutout 16, defined in one end of the retainer 7, and are then held in contact with opposite edges of each of the cutouts 15 and 16 by the effect of an resilient force exerted by such switching spring 13. The neutral position of the retainer 7 is where the engagement elements 9 are disengaged not only from the cylindrical surface 2 but also from the cam faces 6 as shown in Fig. 6(A).

Referring now to Fig. 3, the retainer constraining mechanism 21 for selectively constraining and releasing the retainer 7 relative to the outer member 1 in response to switching on and off of the electromagnet 22, respectively, is provided in between the outer member 1 and the inner member 4. This retainer constraining mechanism 21 is made up of the electromagnet 22, provided on one end of the outer member 1, and an armature 18 slidably mounted on a reduced diameter shaft portion 4a of the inner member 4. The armature 18 is restrained by a detent plate 17 from rotating relative to the retainer 7. More specifically, as shown in Fig. 5, the armature 18 has an arcuate engagement groove 24 defined therein, and the detent plate 17 is formed with an arcuate engagement portion 20 axially extending therefrom. The engagement portion 20 is engaged with the arcuate engagement groove 24 so that the armature 18 is restrained from rotating relative to the detent plate 17. Further, the engagement portion 20 of the detent plate 17 is engaged with the cutout 16 defined in the retainer 7 so that the detent plate 17 is restrained from rotating relative to the retainer 7.

The operation of the roller clutch 60 will now be described in detail. Assuming that the input shaft 3 is rotating, when the electromagnet 22 is electrically energized to magnetically attract and, hence, retain the armature 18, the retainer 7 is restrained from rotating and, therefore, the inner member 4 rotating together with the input shaft 3 rotates relative to the retainer 7. At this time, as best shown in Fig. 6(B), the engagement elements 9 are engaged in part with the corresponding portions of the cylindrical surface 2 and in part with the corresponding cam faces 6. Accordingly, when the inner member 4 rotates relative to the outer member 1 in a direction clockwise as viewed therein while the engagement elements 9 are so engaged, rotation of the inner member 4 can be transmitted to the outer member 1 through the engagement elements 9.

When the inner member 4 and the retainer 7 rotate relative to each other, the cutouts 15 and 16 defined in the inner member 4 and the retainer 7, respectively, are displaced in position in a circumferential direction, accompanied by a resilient deformation of the switching spring 13 that is engaged by the cutouts 15 and 16. Because of this, when the supply of an electric power to an electromagnetic coil of the electromagnet 22 is interrupted, the retainer 7 is returned to the neutral position by the effect of a resilient restoring force of the switching spring 13 and, consequently, the engagement elements 9 are disengaged from the cylindrical surface 2 and also from the cam faces 6, allowing the inner member 4 to rotate freely relative to the outer member 1.

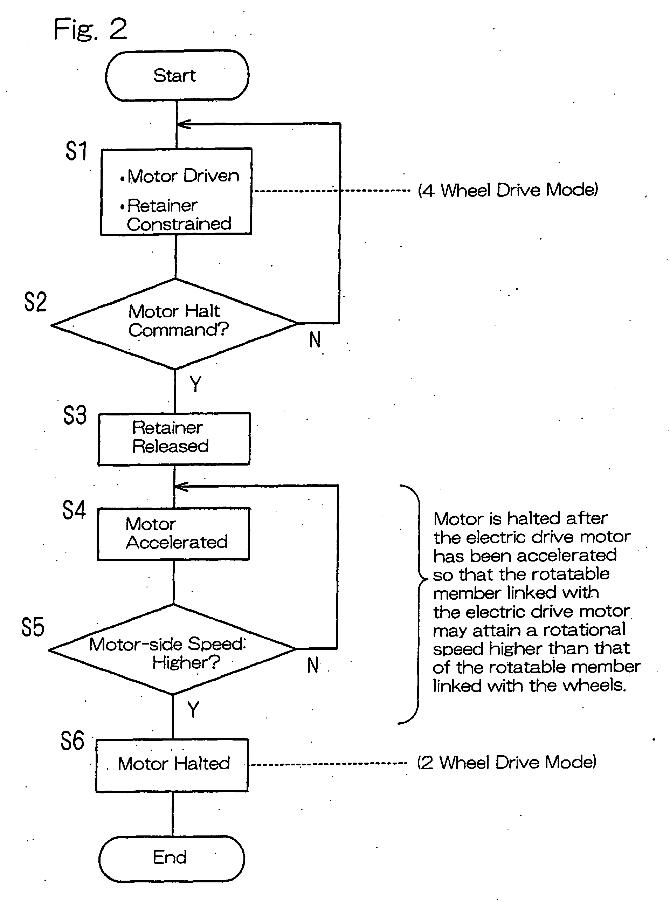

Referring to Figs. 1 and 2, the control system will now be described. The four wheel drive control device 61 referred to previously forms means for switching between the concurrent use of the combustion engine drive system 40 and the electric motor drive system 50 and the use of one of those drive systems 40 and 50. The four wheel drive control device 61 provides a control output according to a preset condition in response to various sensor inputs a from, for example, a vehicle speed sensor (not shown), a rotation sensor for detecting the number of revolutions of the combustion engine 41 and a rotation sensor for detecting the number of revolutions of the electric drive motor 51 and, also, in response to an input provided for by and from a manipulating means maneuvered by an automotive vehicle driver. By way of example, when the automotive vehicle is desired to be started from a halted condition, the four wheel drive control device 61 generates a command necessary to bring the combustion engine 41 and the electric drive motor 51 in a four wheel drive condition, in which the both are utilized to drive the front and rear wheels in unison with each other, and to halt (or deenergize) the electric drive motor 51 when a predetermined condition meets subsequent to the start of the automotive vehicle. The four wheel drive control device 61 is provided as a part of the computer type electric control unit (ECU) (not shown) operable to control the whole of the combustion engine drive system 40 of the automotive vehicle.

The motor-clutch linkage control unit 62 serves as means for controlling the selective energization and deenergization of the electric drive motor 51 and those of the electromagnet 22 in the retainer constraining mechanism 21 of the clutch 60 so as to take place in a manner shown in the flow chart of Fig. 2.

Referring to Fig. 2, when the electric drive motor 51 is operated under, for example, a four wheel drive mode, the motor-clutch linkage control unit 62 keeps the electromagnet 22 of the retainer constraining mechanism 21 of the clutch 60 in an switched-on condition to thereby constrain the retainer at step S1. Starting from this condition, and when a command necessary to halt the electric drive motor 51 in readiness for switching of the four wheel drive mode over to a two wheel drive mode is supplied from the motor drive system control device 61 to the motor-clutch linkage control unit 62 at step S2, the motor clutch linkage control unit 62 switches the electromagnet 22 of the retainer constraining mechanism 21 off to thereby cause the retainer constraining mechanism 21 to release the retainer at step S3.

Thereafter, the electric drive motor 51 is accelerated at step S4 and when at step S5, the rotational speed (the number of revolutions) of the inner member 4, which is a rotatable member linked with the electric drive motor, attains a value higher than that of the outer member 1, which is a rotatable member linked with the wheels, the electric drive motor 51 is halted at step S6. In this way, the automotive vehicle is held under the two wheel drive mode, in which only the combustion engine drive system 40 operates to drive the automotive vehicle.

Operative conditions of the clutch 60 resulting from the control shown in the flow chart of Fig. 2 will now be described with particular reference to Fig. 7. In an electric motor drive condition (under the four wheel drive mode) at step S1, the clutch 60 assumes such a condition as shown in Fig. 7(A). Specifically, the retainer 7 shown in Fig. 6 is constrained in position relative to the outer member 1, which is the rotatable member linked with the wheels, and the engagement elements 9 are held in the positively wedged state, that is, the engagement elements 9 remain locked within the engagement spaces S on the trailing side with respect to the direction of rotation of the inner member 4. In this condition, in view of the fact that the engagement elements 9 are wedged as the inner member 4 starts its rotation in a clockwise direction, as viewed in Fig. 7(A), relative to the outer member 1, the rotation of the inner member 4, which is the rotatable member linked with the electric drive motor, is transmitted to the outer member 1, which is the rotatable member linked with the wheels, allowing the rotational speed Ni of the inner member 4 to attain a value equal to the rotational speed No of the outer member 1. It is to be noted that a difference in length of arrow headed lines affixed with respective reference characters Ni and No represents a difference between the rotational speeds Ni and No.

When while in this condition, the automotive vehicle runs on, for example, a steep down grade and the traveling speed consequently increases above a certain level or the accelerator is released, the outer member 1, which forms the rotatable member linked with the wheels, rotates at a speed higher than that of the inner member 4 as shown in Fig. 7(B). Once the outer member 1 rotates at such higher speed, the engagement elements 9 are held in the reverse (or negatively) wedged state, in which the engagement elements 9 remain locked within the corresponding engagement spaces S on the leading side with respect to the direction of rotation of the inner member 4.

As hereinbefore discussed in connection with the conventional art, in this reverse wedged state, the engagement elements 9 remain wedged within the respective engagement spaces S on the leading side with respect to the direction of rotation of the inner member 4, even though the retainer 7 is merely released, and, therefore, the clutch 60 remains locked in the coupling position.

Even when the automotive vehicle runs on the grade, the positively wedged state shown in Fig. 7(A) is maintained when the vehicle travel speed is low and the accelerator is pedaled down.

According to the foregoing embodiment, before the electric drive motor 51 is brought to a halt, the retainer 7 is released at step S3 as hereinabove described, to thereby accelerate the electric drive motor 51 at step S4 so that at the subsequent step S5, the inner member 4, which is the rotatable member linked with the electric drive motor 51, may attain a rotational speed higher than that of the outer member 1, which is the rotatable member linked with the wheel. Accordingly, even though the clutch 60 is held in the reverse wedged state as shown in Fig. 7(B), the clutch can return to the positively wedged state as shown in Fig. 7(A). If prior to the acceleration of the electric drive motor 51, the clutch 60 is held in the positively wedged state, such positively wedged state can be maintained.

As described above, since the electric drive motor 51 is halted at all times while the clutch 60 is held in the positively wedged state, the engagement elements 9 are disengaged as shown in Fig. 7(C) as a result of the electric drive motor 51 brought to a halt, assuming the neutral position within the engagement spaces S, wherefore the outer member 1, which is the rotatable member linked with the wheels, is held in position freely rotatable relative to the inner member 4, which is the rotatable member linked with the electric drive motor 51.

The motor drive transmission control device of the present invention is thus so designed that as hereinabove described, after the electric drive motor 51 has been accelerated so that the rotational speed of the inner member 4, which is the rotatable member linked with the electric drive motor 51, may attain a value higher than that of the outer member 1, which is the rotatable member linked with the wheels, the electric drive motor 51 is brought to a halt, and, accordingly, the electric drive motor 51 can be halted while the clutch 60 is in the positively wedged state. Because of this, it is possible to avoid the clutch 60 being locked in the coupling position, thereby ensuring a release of the clutch from the coupling position.

In such case, since the electric drive motor 51 is accelerated after the retainer 7 has been released, release of the clutch 60 from the coupling position can be accomplished more assuredly than when the retainer 7 is released after the electric drive motor 51 has been accelerated. Accordingly, since the clutch 60 is not locked in the coupling position at the time the electric drive motor 51 is halted, an over speed rotation of the electric drive motor 51, which may result from a reverse input from the wheels due to the clutch locking, can be avoided assuredly.

It is to be noted that although in the foregoing embodiment the clutch 60 has been shown and described as having the inner member 4 serving as the rotatable member linked with the electric drive motor 51, the inner member 4 may be the rotatable member linked with the wheels.

Also, although in the foregoing embodiment, reference has been made to the gas-electric hybrid car of a type utilizing the combustion engine 41 and the electric drive motor 51, the present invention can be equally applied to an automotive vehicle of a type that is operated only with the electric drive motor 51 and also to an automotive vehicle of a type that makes use of the electric motor drive system 50 utilizing the electric drive motor 51 with an additional electric motor drive (not shown) for driving different wheels 45.

## Claims

1. A motor drive transmission control device which comprises:
a clutch (60) disposed in a drive transmission system for transmitting a drive from an electric drive motor (51) to wheels (56):
the clutch comprising a first rotatable member (4) linked with the electric drive motor and a second rotatable member (1) linked with the wheels, the first rotatable member and the second rotatable member being positioned one inside the other relative to each other; a cylindrical surface (2) provided in one of the first and second rotatable members; a plurality of circumferentially spaced cam faces (6) provided in the other of the first and second rotatable members and defining engagement spaces in cooperation with the cylindrical surface; engagement elements (9) interposed within those engagement spaces; a retainer (7) for regulating respective positions of the engagement elements in a circumferential direction; and a retainer constraining mechanism (21) for selectively constraining and releasing the retainer relative to such one of the first and second rotatable members, whereby when the retainer is held in a constrained condition by the retainer constraining mechanism, the engagement elements are wedged within the corresponding engagement spaces to enable rotation in one of opposite directions to be transmitted between the first and second rotatable members;
the motor drive transmission control device (61) being **characterized by** further comprising a motor-clutch linkage control unit (62) operable to cause the retainer constraining mechanism to constrains the retainer, when the electric drive motor is operated, and to release the retainer when receiving a halt command to halt the electric drive motor, and to halt the electric drive motor after the electric drive motor is accelerated to allow the first rotatable member to attain a rotational speed higher than that of the second rotatable member,

2. The motor drive transmission control device as claimed in Claim 1, wherein in an automotive vehicle including an electric motor drive system for transmitting a drive from the electric drive motor to the wheels and a combustion engine drive system for transmitting a drive from a combustion engine to other wheels, the motor-clutch linkage control unit is operable to perform a series of controls ranging from the release of the retainer to the acceleration and halt of the electric drive motor in response to the halt command to halt the electric drive motor during an operation of the combustion engine and the electric drive motor.

3. The motor drive transmission control device as claimed in Claim 1 or 2, wherein the clutch is an electromagnetically operated roller clutch and the retainer constraining mechanism comprises an electromagnet (22) capable of being switched on and off to constrain and release the retainer, respectively, one at a time.

4. The motor drive transmission control device as claimed in any one of Claims 1 to 3, wherein the clutch comprises a switching spring (13) engaged by the retainer and the inner member for applying a spring force biasing the retainer towards a released condition.

## Patentansprüche

1. Motorantriebsübertragungssteuervorrichtung, die Folgendes umfasst:
eine Kupplung (60), die in einem Antriebsübertragungssystem zum Übertragen eines Antriebs von einem elektrischen Antriebsmotor (51) zu Rädern (56) angeordnet ist;
wobei die Kupplung ein erstes drehbares Element (4) umfasst, das mit dem elektrischen Antriebsmotor verbunden ist, und ein zweites drehbares Element (1) umfasst, das mit den Rädern verbunden ist, wobei das erste drehbare Element und das zweite drehbare Element eines im anderen in Bezug aufeinander positioniert sind; eine zylindrische Fläche (2), die in dem ersten oder dem zweiten drehbaren Element angeordnet ist; mehrere entlang des Umfangs voneinander beabstandete Nockenflächen (6), die in dem anderen des ersten bzw. zweiten drehbaren Elements angeordnet sind und im Zusammenwirken mit der zylindrischen Fläche Eingriffnahmeräume definieren; Eingriffnahmeelemente (9'), die innerhalb dieser Eingriffnahmeräume angeordnet sind; eine Rückhaltevorrichtung (7) zum Regulieren jeweiliger Positionen der Eingriffnahmeelemente in einer Umfangsrichtung; und einen Rückhaltevorrichtungs-Arretierungsmechanismus (21) zum wahlweisen Arretieren und Freigeben der Rückhaltevorrichtung relativ zu dem betreffenden ersten bzw. zweiten drehbaren Element, wobei, wenn die Rückhaltevorrichtung durch den Rückhaltevorrichtungs-Arretierungsmechanismus in einem arretierten zustand gehalten wird, die Eingriffnahmeelemente innerhalb der entsprechenden Eingriffnahmeräume verkeilt sind, um eine Drehung in einer von entgegengesetzten Richtungen zu ermöglichen, die zwischen dem ersten und dem zweiten drehbaren Element übertragen werden soll;
wobei die Motorantriebsübertragungssteuervorrichtung (61) **dadurch gekennzeichnet ist, dass** sie des Weiteren eine Motor-Kupplung-Verbindungssteuereinheit (62) umfasst, die dafür geeignet ist, den Rückhältevorrichtungs-Arretierungsmechanismus zu veranlassen, die Rückhaltevorrichtung zu arretieren, wenn der elektrische Antriebsmotor betätigt wird, und die Rückhaltevorrichtung freizugeben, wenn ein Anhaltebefehl erhalten wird, den elektrischen Antriebsmotor anzuhalten, und den elektrischen Antriebsmotor anzuhalten, nachdem der elektrische Antriebsmotor beschleunigt wurde, damit das erste drehbare Element eine Drehzahl erreichen kann, die höher als die Drehzahl des zweiten drehbaren Elements ist.

2. Motorantriebsübertragungssteuervorrichtung nach Anspruch 1, wobei in einen Automobil, das ein Elektromotorantriebssystem zum Übertragen eines Antriebs von dem elektrischen Antriebsmotor zu den Rädern und ein Verbrennungsmotorantriebssystem zum Übertragen eines Antriebs von einem Verbrennungsmotor zu anderen Rädern enthält, die Motor-Kupplung-Verbindungssteuereinheit dafür geeignet ist, eine Anzahl von Steuerfunktionen auszuführen, die von der Freigabe der Rückhaltevorrichtung bis zur Beschleunigung und dem Anhalten des elektrischen Antriebsmotors in Reaktion auf den Anhaltebefehl zum Anhalten des elektrischen Antriebsmotors während eines Betriebes des Verbrennungsmotors und des elektrischen Antriebsmotores reichen.

3. Motorantriebsübertragungssteuervorrichtung nach Anspruch 1 oder 2, wobei die Kupplung eine elektromagnetisch betätigte Rollenkupplung ist und der Rückhaltevorrichtungs-Arretierungsmechanismus einen Elektromagneten (22) umfasst, der an und aus geschaltet werden kann, um die Rückhaltevorrichtung jeweils zu arretieren bzw. freizugeben.

4. Motorantriebsübertragungssteuervorrichtung nach einem der Ansprüche 1 bis 3, wobei die Kupplung eine Schaltfeder (13) umfasst, die durch die Rückhaltevorrichtung und das innere Element in Eingriff genommen wird, um eine Federkraft anzulegen, welche die Rückhaltevorrichtung in Richtung eines freigegebenen Zustandes vorspannt.

## Revendications

1. Dispositif de commande de la transmission de l'énergie d'entrainement d'un moteur, comprenant :
un embrayage (60) disposé dans un système de transmission de l'énergie d'entrainement, pour transmettre une énergie d'entrainement, d'un moteur d'entraînement électrique (51) à des roues (56) ;
l'embrayage comprenant un premier organe rotatif (4), relié au moteur d'entraînement électrique, et un deuxième organe rotatif (1), relié aux roues, le premier organe rotatif et le deuxième organe rotatif étant positionnés l'un à l'intérieur de l'autre ; une surface (2) cylindrique, prévue dans l'un des premier et deuxième organes rotatifs une pluralité de surfaces de came (6) espacées circonférentiellement, prévues dans l'autre des premier et deuxième organes rotatifs et définissant des surfaces de mise en prise, en coopération avec la surface cylindrique ; des éléments de mise en prise (9), interposés à l'intérieur de ces espaces de mise en prise ; un organe de retenue (7), pour réguler des positions respectives des éléments de mise en prise dans une direction circonférentielle ; et un mécanisme de retenue d'organe de retenue (21), pour sélectivement retenir et relâcher l'organe de retenue par rapport à l'un desdits premier et deuxième organes rotatifs, de manière que, lorsque l'organe de retenue est maintenu en un état retenu par le mécanisme de retenue d'organe de retenue, les éléments de mise en prise soient coincés à l'intérieur des espaces de mise en prise correspondants, de manière à permettre qu'une rotation, dans l'un des sens opposés, soit transmise entre les premier et deuxième organes rotatifs ;
le dispositif de commande de la transmission de l'énergie d'entrainement d'un moteur (61) d'un moteur étant **caractérisé par** le fait de comprendre en outre une unité de commande de liaison moteur-embrayage (62), susceptible de fonctionner pour que le mécanisme de retenue d'organe de retenue retienne l'organe de retenue lorsque le moteur d'entraînement électrique est actionné, et relâche l'organe de retenue lorsqu'il reçoit une instruction d'arrêt du moteur d'entraînement électrique, et de stopper le moteur d'entraînement électrique après que le moteur d'entraînement électrique ait accéléré, de manière à permettre au premier organe rotatif d'atteindre une vitesse de rotation supérieure à celle du deuxième organe rotatif.

2. Dispositif de commande de la transmission de l'énergie d'entraînement d'un moteur selon la revendication 1, dans lequel, dans un véhicule automobile comprenant un système de propulsion par moteur électrique, pour transmettre une énergie d'entrainement, du moteur d'entraînement aux roues, et un système de propulsion par moteur thermique à combustion, pour transmettre une énergie d'entrainement, d'un moteur à combustion aux autres roues, l'unité de commande de liaison moteur-embrayage est susceptible de fonctionner pour accomplir une série de commandes, allant de la libération de l'organe de retenue à l'accélération et à l'arrêt du moteur électrique, en réponse à l'instruction de mise à l'arrêt, de manière à stopper le moteur d'entraînement électrique durant un fonctionnement du moteur thermique à combustion et du moteur d'entraînement électrique.

3. Dispositif de commande de la transmission de l'énergie d'entrainement d'un moteur selon la revendication 1 ou la revendication 2, dans lequel l'embrayage est un embrayage à galets, à actionnement électromagnétique, et le mécanisme de retenue d'organe de retenue comprend un électroaimant (22), capable d'être commuté en service et hors service, de manière à retenir et à relâcher l'organe de retenue, respectivement, un à la fois.

4. Dispositif de commande de la transmission de l'énergie d'entrainement d'un moteur l'une quelconque des revendications 1 à 3, dans lequel l'embrayage comprend un ressort de commutation (13), coopérant avec l'organe de retenue et l'organe intérieur, pour appliquer une force élastique sollicitant l'organe de retenue vers un état relâché.
